# EUROPÄISCHE PATENTSCHRIFT

(11) **EP 1 850 013 B1**
(45) Veröffentlichungstag und Bekanntmachung des Hinweises auf die Patenterteilung: **02.05.2012**
(21) Anmeldenummer: 07006494.4
(22) Anmeldetag: 29.03.2007
(51) Int. Cl.: F24F 11/00, F04D 27/02

(54) **Anordnung mit einem Lüfter**
Ventilator assembly
Ensemble ventilateur

(30) Priorität: 24.04.2006 DE 102006020421
(43) Veröffentlichungstag der Anmeldung: 31.10.2007
(73) Patentinhaber: ebm-papst St. Georgen GmbH & Co. KG, 78112 St. Georgen (DE)
(72) Erfinder: Karwath, Arno, 78652 Deißlingen (DE)
(74) Vertreter: Raible, Tobias

(56) Entgegenhaltungen:
- EP-A1- 1 039 139
- EP-A2- 0 681 150
- DE-A1- 10 035 829
- DE-A1- 10 230 242
- DE-T2- 69 101 216
- US-A- 4 806 833

## Beschreibung

Die Erfindung betrifft eine Anordnung geeignet für einen Lüfter, insbesondere einen Axiallüfter für die Belüftung eines Niedrigenergiehauses.

Niedrigenergiehäuser werden in der Regel zwangsbelüftet. Dabei sind zur Belüftung unterschiedlicher Räume je nach Nutzungsart verschiedene Luft-Volumenströme erforderlich. In einem Badezimmer wird beispielsweise ein kontinuierlicher Luft-Volumenstrom zwischen 5 l/s und 10 l/s gewünscht. Wenn geduscht oder gebadet wird, sollte der Luft-Volumenstrom z.B. automatisch auf 15 l/s gesteigert werden, um eine ausreichende Belüftung des Badezimmers zu gewährleisten. Um hierbei einen minimalen Luft-Volumenstrom bei unterschiedlichen Staudrücken zu gewährleisten, werden gewöhnlich Lüfter mit entsprechender Leistungsreserve eingesetzt. Derartige Lüfter fördern entsprechend ihrer charakteristischen Lüfterkennlinie bei maximal möglichem Staudruck den minimalen Luft-Volumenstrom, und bei niedrigem Staudruck einen wesentlich größeren Luft-Volumenstrom. Bei zu hohem Luft-Volumenstrom geht jedoch viel Wärme verloren, und es ergibt sich eine unnötige Lärmbelästigung, weil der Lüfter ständig bei hoher Drehzahl betrieben wird.

Derzeit sind Luft-Volumenstromregelungen für Radiallüfter mit vorwärts gekrümmten Schaufeln bekannt, da bei diesen eine eindeutige Beziehung zwischen Luft-Volumenstrom und Drehmoment bzw. Motorstrom besteht. Deshalb ist in Abhängigkeit von der Drehzahl und jeweiligen Stromaufnahme eine geeignete Luft-Volumenstromregelung solcher Radiallüfter möglich.

Wegen ihrer mechanischen Abmessungen und der Luftumlenkung um 90° sind jedoch Radiallüfter zum Einbau in bereits vorhandenen Lüftungsrohren gewöhnlich ungeeignet. Im Gegensatz hierzu können Anordnungen mit Axiallüftern meist direkt in vorhandene Lüftungsrohre eingebaut werden.

Aus der DE 100 35 829 A1 ist eine Anordnung mit einem Lüfter bekannt, der hauptsächlich zur Stallentlüftung dient, und alle Merkmale des Oberbegriffs des Anspruchs 1 offenbart. Diese Anordnung arbeitet mit einer Zwischenkreisspannung von 400 V und treibt über eine Endstufe einen ECM an, der zum Antrieb eines Lüfters in einem Abluftkamin dient.

Im Betrieb werden die aktuelle Drehzahl des Motors und das aktuelle Drehmoment bestimmt, z.B. 1,61 Nm bei 1200 U/min. Dieses Drehmoment wird auf 1000 U/min umgerechnet, also 1,21 Nm bei 1000 U/min.

Für diesen Wert entnimmt man einer gespeicherten Tabelle eine Fördermenge von 5350 m^3/h bei 1000 U/min. Dieser Wert wird wieder hochgerechnet auf 1200 U/min, entsprechend einer Fördermenge von 6420 m^3/h.

Bei dieser Lüftungsanordnung werden die Volumenströme in Drehzahlen umgerechnet, und durch Änderung der Betriebsspannung des ECM wird auf die gewünschte Drehzahl entsprechend dem gewünschten Volumenstrom geregelt.

Über die Genauigkeit des Verfahrens ist nichts bekannt, aber für eine Stallbelüftung wird es genügen. - Bei einem Sturm wird eine Drosselklappe im Abluftkamin automatisch geschlossen.

Aus der EP 1 039 139 A1 kennt man eine Anordnung mit einem Radialgebläse, das auf einer vorgegebenen Kennlinie arbeiten soll. Dabei wird die Drehzahl des Gebläses auf eine künstliche Gebläsekennlinie geregelt. Hierbei spielen der augenblickliche Motorstrom und die augenblickliche Gebläsedrehzahl eine Rolle.

Aus der EP 0 681 150 A2 kennt man eine Lüfteranordnung zur Regelung der Durchflussmenge in einem System von Luftkanälen. Diese Anordnung arbeitet mit einem Surrogatwert für den Volumenstrom, und dieser Wert wird berechnet aus der Lüfterdrehzahl und einer geeigneten Formel. Dieser theoretische Wert für den Volumenstrom wird dann zur Drehzahlregelung des Lüftermotors verwendet.

Die US 4 806 833, die nur als technologischer Hintergrund genannt wurde, zeigt ein Belüftungssystem, das mit einem Radiallüfter arbeitet. Letzterer wird von einem ECM angetrieben, und der Strom zum ECM wird erfasst und so beeinflusst, dass der statische Druck im belüfteten System konstant gehalten wird. Auf diese Weise will man ein billiges Lüftersystem herstellen, bei welchem der Volumenstrom etwa konstant ist, doch handelt es sich nicht um eine Volumenstromregelung.

Ferner kennt man aus der DE 691 01 216 T2 (= EP 0 848 150 B1) eine Anordnung zur Belüftung eines Systems von Kanälen, z.B. in einem Bergwerk oder einer Fabrik. Der Istwert der Durchströmrate wird gemessen und auf einen Sollwert geregelt. Der CO2-Gehalt der geförderten Luft wird gemessen. Im europäischen Recherchenbericht ist diese Schrift als technologischer Hintergrund bezeichnet.

Auch kennt man aus der DE 102 30 242 A1 ein Verfahren zum Betreiben einer Gebläseeinrichtung in einem Elektroherd. Dieser hat eine Lüfteranordnung zum Erzeugen einer Umluft, und diese Anordnung wird von einem ECM mit variabler Drehzahl angetrieben.

Wenn es in dem Herd sehr heiß wird, wird der ECM auf eine niedrigere Drehzahl umgeschaltet, wodurch sich die Garzeit verlängert. Wird es zu heiß, so wird der Herd ganz abgeschaltet. - Für die Kühlung des ECM und der Elektronik ist ein zweites Lüfterrad vorgesehen, ebenfalls in Form eines Radiallüfterrads.

Die Durchströmrate durch das Lüfterrad wird durch die Drehzahl des ECM bestimmt, jedoch nicht gemessen. - Auch diese Schrift ist im europäischen Recherchenbericht nur als "technologischer Hintergrund" bezeichnet. Es ist deshalb eine Aufgabe der Erfindung, eine neue Anordnung für einen Lüfter und einen zu dessen Antrieb dienenden elektronisch Kommutierten Elektromotor bereit zu stellen.

Nach der Erfindung wird diese Aufgabe gelöst durch eine Anordnung gemäß Anspruch 1. Eine solche Anordnung ermöglicht es, einen den Lüfter antreibenden elektronisch kommutierten Motor (ECM) derart anzusteuern, dass der Lüfter einen im Wesentlichen konstanten Luft-Volumenstrom erzeugt. Hierzu wird die Drehzahl des ECM als Funktion eines jeweils gemessenen Luft-Volumenstrom des Lüfters so geregelt, dass dieser Volumenstrom etwa einem vorgegebenen Wert entspricht.

Eine bevorzugte Weiterbildung der Erfindung ist Gegenstand des Anspruchs 9. Man erhält hierdurch einen sehr kompakten und preiswerten Regelkreis für den ECM.

Eine bevorzugte Weiterbildung der Erfindung ist Gegenstand des Anspruchs 16. Man erhält hierdurch einen einfachen und stabilen Regelkreis für den ECM.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: ein Blockdiagramm einer Lüfteranordnung gemäß einer Ausführungsform,
- Fig. 2: eine raumbildliche Darstellung einer Lüfteranordnung mit thermischem Anemometer gemäß einer Ausführungsform,
- Fig. 3: ein Schaltungsdiagramm des thermischen Anemometers der Fig. 2,
- Fig. 4: ein Blockdiagramm einer Lüfteranordnung mit Klappen-Anemometer gemäß einer Ausführungsform,
- Fig. 5: eine Kennlinie des Klappen-Anemometers von Fig. 4,
- Fig. 6: ein Flussdiagramm für eine Initialisierungs-Routine der Lüfteranordnung von Fig. 2 oder Fig. 4,
- Fig. 7: ein Flussdiagramm für eine Luft-Volumenstrom-Regelungsroutine im Betrieb der Lüfteranordnung von Fig. 2 oder Fig. 4,
- Fig. 8: eine beispielhafte Kennlinie für einen bei Fig. 6 und Fig. 7 erforderlichen Korrekturwert,
- Fig. 9: ein beispielhaftes Messprotokoll eines Lüfters mit Luft-Volumenstromregelung gemäß einer Ausführungsform, und
- Fig. 10: ein anderes beispielhaftes Messprotokoll eines Lüfters mit Luft-Volumenstromregelung gemäß einer Ausführungsform.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

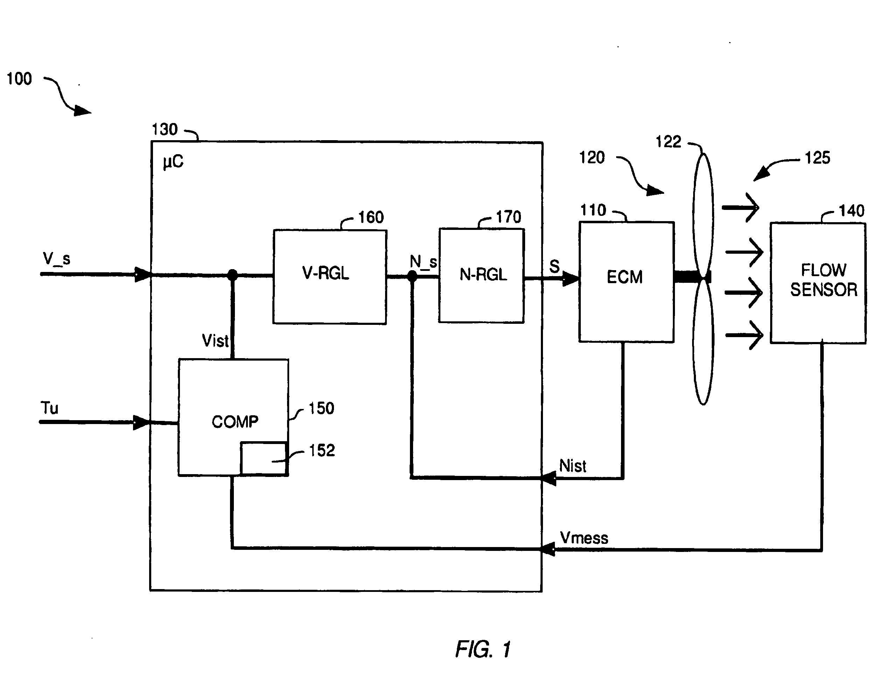

Fig. 1 zeigt eine Lüfteranordnung 100 mit einem Lüfter 120, welcher ein Lüfterrad 122 hat. Dem Lüfter 120 ist zu seinem Antrieb ein von einem Mikrocontroller (Mikroprozessor) µC 130 gesteuerter ECM 110 zugeordnet. Der Mikrocontroller 130 hat eine Temperatur- und Offset-Kompensationsanordnung COMP 150, eine Volumenstrom-Regelanordnung V-RGL 160, und einen Drehzahlregler N-RGL 170.

Eingangsseitig ist der µC 130 mit einer Erfassungsvorrichtung FLOW SENSOR 140 zur Erfassung eines vom Lüfter 120 erzeugten Luft-Volumenstroms, welcher mit Pfeilen 125 schematisch angedeutet ist, und dem ECM 110 verbunden. Ausgangsseitig ist der µC 130 mit dem ECM 110 verbunden.

Es wird darauf hingewiesen, dass die Anordnung 150 beispielhaft als eine einzelne Komponente dargestellt ist. Deren Funktionen können jedoch ebenso durch unterschiedliche Komponenten ausgeführt werden, welche getrennt voneinander realisiert werden.

### Arbeitsweise

lm Betrieb der Anordnung 100 wird der Lüfter 120 von dem ECM 110 angetrieben, wobei das Lüfterrad 122 in Drehung versetzt wird und einen Luft-Volumenstrom 125 in Richtung zur Erfassungsvorrichtung 140 erzeugt. Dieser wird von der Erfassungsvorrichtung 140 erfasst, welche hierfür einen Volumenstrom-Messwert Vmess erzeugt.

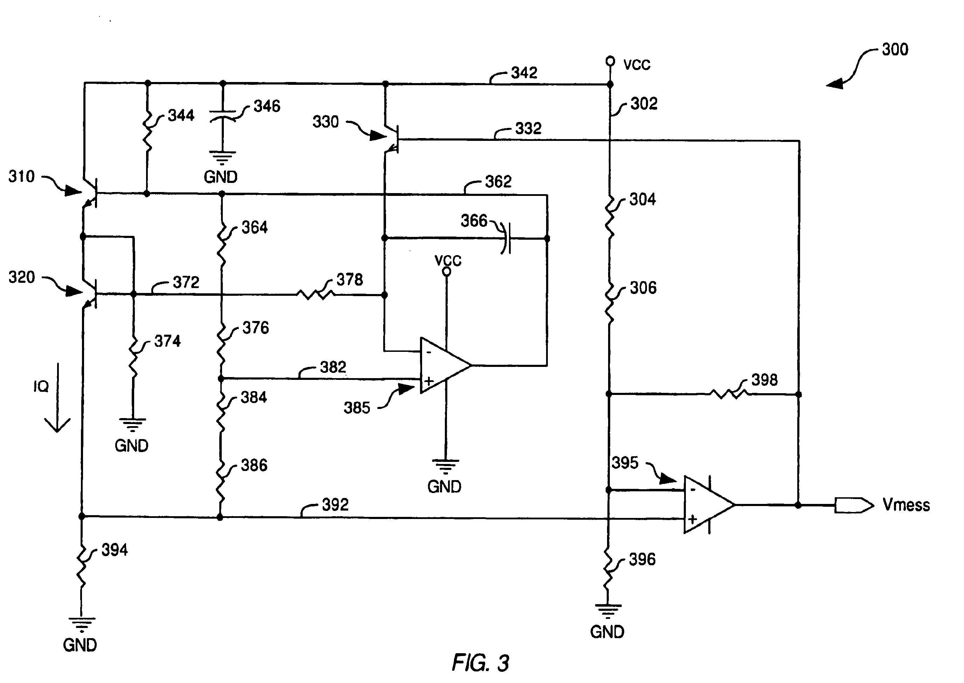

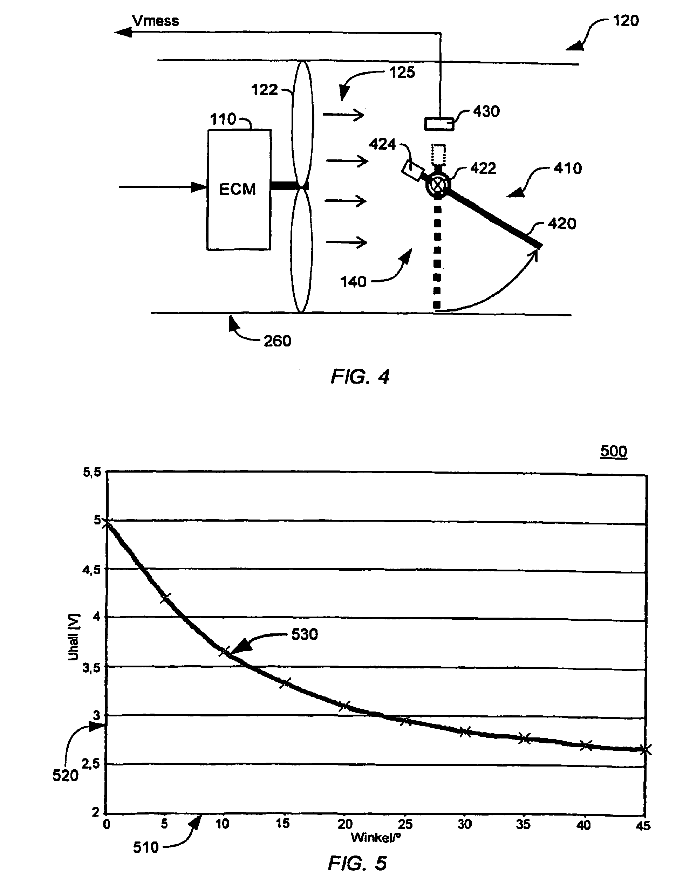

Die Erzeugung dieses Messwerts Vmess erfolgt unter Verwendung einer hierzu geeigneten Vorrichtung, beispielsweise eines thermischen Anemometers oder eines Klappen-Anemometers. Ein beispielhaftes thermisches Anemometer mit Halbleitersensoren wird nachstehend bei Fig. 3 beschrieben. Ein beispielhaftes Klappen-Anemometer mit Magnetsensor wird nachstehend bei Fig. 4 beschrieben. Es wird darauf hingewiesen, dass die Erfassung des Luft-Volumenstroms 125 und die Erzeugung des Messwerts Vmess auf jede hierfür geeignete Art und Weise erfolgen kann. Z.B. kann anstelle der beschriebenen Anemometer auch ein beliebiges anderes Anemometer verwendet werden, z.B. ein thermisches Hitzdrahtanemometer, ein Klappen-Anemometer mit Potentiometer, oder ein Windradanemometer zur Messung des Luft-Volumenstroms und zur Erzeugung des Messwerts Vmess.

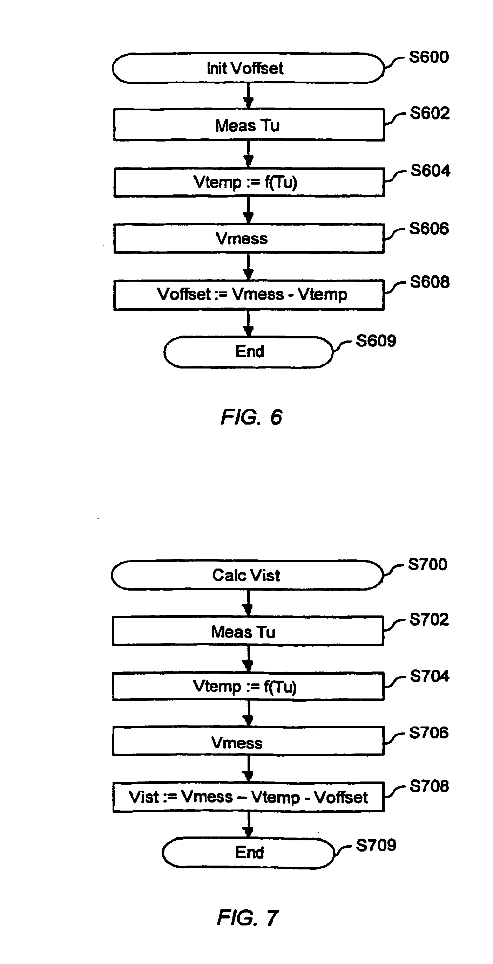

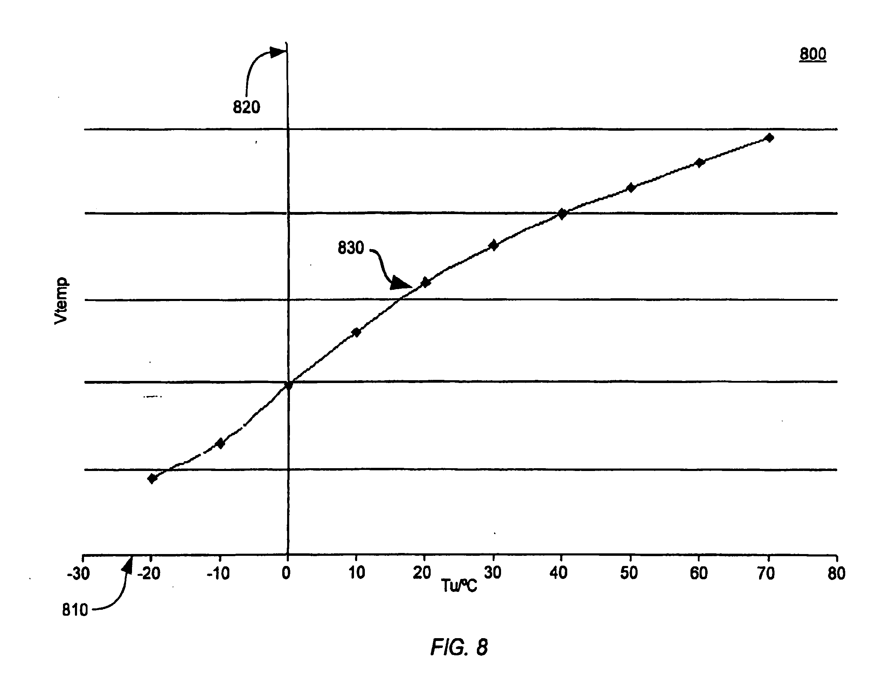

Der Messwert Vmess und die aktuelle Temperatur Tu werden der Temperatur- und Offset-Kompensationsanordnung 150 zugeführt. Diese ist dazu ausgebildet, bei der Inbetriebnahme des Lüfters 120 den Messwert Vmess in Abhängigkeit von der aktuellen Temperatur Tu zu korrigieren und im Betrieb des Lüfters 120 einen im Messwert Vmess durch die Erfassungsvorrichtung 140 entstehenden Offset zu kompensieren. Hierzu hat die Anordnung 150 eine Speichereinheit 152, in welcher von der aktuellen Temperatur Tu abhängige Korrekturwerte zur Korrektur des Messwerts Vmess gespeichert sind. Aus dieser Speichereinheit 152 bestimmt die Anordnung 150 bei der Inbetriebnahme des Lüfters 120 abhängig von einer jeweils bestimmten aktuellen Temperatur Tu einen entsprechenden Korrekturwert, mit dem der Messwert Vmess korrigiert wird. Ein beispielhaftes Verfahren zur Temperaturkompensation des Messwerts Vmess bei Inbetriebnahme des Lüfters 120 wird bei Fig. 6 beschrieben. Beispielhafte Korrekturwerte werden bei Fig. 8 beschrieben.

Im Betrieb des Lüfters 120 bestimmt die Anordnung 150 bei einer vorgegebenen Lüfterdrehzahl den durch die Erfassungsvorrichtung 140 erzeugten Offset des Messwerts Vmess und korrigiert diesen abhängig von der aktuellen Temperatur Tu. Der korrigierte Offset wird als temperaturkompensierter Offset abgespeichert und dem tatsächlichen Volumenstrom-Messwert durch einen Additions- oder Subtraktionsvorgang zwecks Offset-Kompensation beaufschlagt. Ein beispielhaftes Verfahren zur Offset-Kompensation des tatsächlichen Messwerts im Betrieb des Lüfters 120 wird bei Fig. 7 beschrieben.

Der Temperatur- und Offset-kompensierte Messwert Vmess, welcher nachfolgend auch als als Vist bezeichnet wird, wird mit einem Volumenstrom-Sollwert V_s verknüpft und der Regelanordnung 160 zugeführt. Hierbei erfolgt beispielsweise ein Vergleich der beiden Werte, um eine Abweichung des Werts Vᵢₛₜ vom Sollwert V_s zu bestimmen. Die Anordnung 160 ermittelt in Abhängigkeit von der ermittelten Abweichung einen Drehzahl-Sollwert N_s für den ECM 110.

Der Drehzahl-Sollwert N_s wird mit dem Drehzahl-lstwert Nᵢₛₜ verknüpft und dem Drehzahlregler 170 zugeführt. Die Bestimmung des lstwerts Nist kann durch jede beliebige geeignete Vorrichtung zur Drehzahlbestimmung erfolgen, beispielsweise unter Verwendung von analogen oder digitalen Rotorstellungssensoren. Bei der Verknüpfung beider Werte wird vorzugsweise eine Abweichung des Istwerts Nist von dem Sollwert N_s bestimmt. Der Drehzahlregler 170 erzeugt unter Verwendung dieser Abweichung eine Stellgröße S, welche zur Regelung der Drehzahl des ECM 110 auf den von der Volumenstrom-Regelanordnung 160 erzeugten Drehzahl-Sollwert N_s dient.

Dies ermöglicht es, den ECM 110 derart anzusteuern, dass der Lüfter 120 unabhängig von seiner Bauart einen etwa konstanten Luft-Volumenstrom erzeugt.

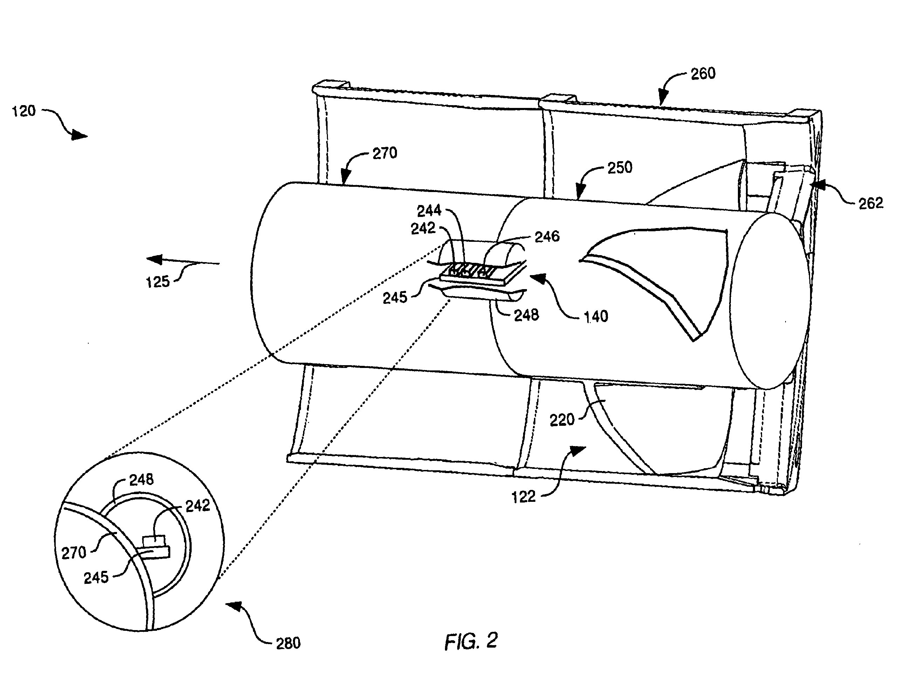

**Fig. 2** zeigt eine perspektivische, teilweise geschnittene Ansicht einer Ausführungsform des Lüfters 120 von Fig. 1, welcher beispielhaft als sogenannter Rohrlüfter dargestellt ist. Dieser hat ein Rohr 260, in dem der (nicht dargestellte) Innenstator des ECM 110 in einem Statortopf 270 angeordnet ist, welcher z.B. mittels (nicht dargestellter) Speichen in dem Rohr 260 befestigt ist. Um den Stator 270 herum rotiert im Betrieb ein Außenrotor 250, auf dessen Peripherie das mit Lüfterflügeln 220 versehene Lüfterrad 122 befestigt ist. Die Flügel 220 erzeugen im Betrieb einen Luft-Volumenstrom 125, der nach links axial durch das Rohr 260 transportiert wird. Aus diesem Grunde nennt man einen solchen Lüfter einen Axiallüfter. Fig. 2 zeigt rechts die Zuströmseite mit einem Schutzgitter 262 und links die Abströmseite des Lüfters 120.

Gemäß einer bevorzugten Ausführungsform ist an dem Statortopf 270 ein Luftleitrohr 248 vorgesehen, in dem zumindest ein Teil der Erfassungsvorrichtung 140 angeordnet ist. Diese umfasst in Fig. 2 beispielhaft eine Leiterplatte 245 und zwei darauf angeordnete Halbleitersensoren 242, 244 zur Erfassung des Luft-Volumenstroms 125, welche Teil eines thermischen Anemometers sind. Ein beispielhaftes thermisches Anemometer wird bei Fig. 3 beschrieben.

Die Sensoren 242, 244 sind thermisch entkoppelt, um eine Bestimmung der Strömungsgeschwindigkeit des Luft-Volumenstroms 125 über deren differentielle Erwärmung zu ermöglichen. Diese thermische Entkopplung kann durch entsprechende Schlitze in der Leiterplatte 245 verstärkt werden. Aus der Strömungsgeschwindigkeit wird der Volumenstrom-Messwert Vmess abgeleitet.

Rechts von den beiden Sensoren 242, 244 ist ein Temperatursensor 246 vorgesehen, der dem Lüfterrad 122 zugewandt ist und zur Messung der aktuellen Temperatur Tu dient. Da sich eine Verschmutzung der Sensoren 242, 244 negativ auf die Messung des Luft-Volumenstroms 125 auswirken kann und der Temperatursensor 246 unempfindlich gegen Verschmutzung ist, dient er als Schmutzfänger für die beiden Sensoren 242, 244.

Eine vergrößerte Detailansicht des am Statortopf 270 vorgesehenen Luftleitrohrs 248 mit der darin angeordneten Leiterplatte 245 und den Sensoren 242, 244, 246 ist in Fig. 2 bei 280 in Draufsicht von links gezeigt. Da die Sensoren 242, 244, 246 in einer Linie hintereinander angeordnet sind, damit der Temperatursensor 246 als Schmutzfänger für die Halbleitersensoren 242, 244 dienen kann, ist bei 280 nur der Halbleitersensor 242 sichtbar.

Das Luftleitrohr 248 bewirkt, dass eine gleichförmige Luftströmung über die Sensoren 242, 244, 246 geleitet wird, um eine akkurate Messung des Luft-Volumenstroms 125 zu ermöglichen. Dies ist erforderlich, da bei maximalem Gegendruck keine Luft mehr durch das Rohr 260 gefördert wird, aber im Bereich des Luftleitrohrs 248 auf Grund der Wirkung des Lüfterrades 122 dennoch eine stark verwirbelte Luftströmung auftreten kann. Diese kann die Messung der Strömungsgeschwindigkeit stark verfälschen und wird deshalb durch die Wirkung des Luftleitrohrs 248 unterdrückt.

Fig. 3 zeigt ein vereinfachtes Schaltbild einer beispielhaften Schaltung 300, mit welcher ein thermisches Anemometer gemäß einer bevorzugten Ausführungsform realisiert wird. Die Schaltung 300 umfasst zwei Bipolartransistoren 310, 320, welche bei Fig. 2 als Halbleitersensoren 242, 244 zur Messung des Luft-Volumenstroms 125 dienen.

Der Kollektor des Transistors 310 ist einerseits über einen Widerstand 344 mit seiner Basis und andererseits über eine Leitung 342 mit einer Versorgungsspannungsquelle Vcc verbunden. Sein Emitter ist mit Kollektor und Basis des Transistors 320 verbunden. Seine Basis ist über eine Leitung 362 mit dem Ausgang eines Operationsverstärkers 385 verbunden und über zwei in Reihen geschaltete Widerstände 364, 376 mit einer Leitung 382, welche einerseits mit dem nicht-invertierenden Eingang des Operationsverstärkers 385 und andererseits über zwei in Reihe gestaltete Widerstände 384, 386 mit einer Leitung 392 verbunden ist. Der Operationsverstärker 385 wird unter Verwendung der Versorgungsspannungsquelle Vcc und Masse GND angesteuert. Der invertierende Eingang dieses Operationsverstärkers 385 ist über einen Widerstand 378 mit der Basis des Transistors 320 verbunden, welche über einen Widerstand 374 mit Masse GND verbunden ist. Der Emitter des Transistors 320 ist einerseits mit einer Leitung 392 und andererseits über einen Widerstand 394 mit Masse GND verbunden.

Die Leitung 342 ist über einen Kondensator 346 mit Masse verbunden und ebenso mit dem Kollektor eines npn-Transistors 330, dessen Emitter einerseits über einen Kondensator 366 mit der Leitung 362 und andererseits mit dem invertierenden Eingang des Operationsverstärkers 385 verbunden ist. Seine Basis ist über eine Leitung 332 mit dem Ausgang eines Operationsverstärkers 395 verbunden, welcher auch über einen Widerstand 398 mit dessen invertierendem Eingang verbunden ist und an dem der Volumenstrom-Messwert Vmess erzeugt wird. Der invertierende Eingang des Operationsverstärkers 395 ist darüber hinaus über eine Reihenschaltung zweier in einer Leitung 302 angeordneter Widerstände 304, 306 mit Vcc verbunden und über einen Widerstand 396 mit Masse GND. Der nicht-invertierende Eingang des Operationsverstärkers 395 ist mit der Leitung 392 verbunden.

Im Betrieb der Schaltung 300 bewirkt der Operationsverstärker 385, unabhängig von thermischen Widerstands- und Umgebungstemperaturänderungen, eine vorgegebene, etwa konstante Temperaturdifferenz von beispielsweise 25° C zwischen den beiden in Reihe geschalteten Transistoren 310, 320, durch welche ein Strom I_{Q} fließt. Der Operationsverstärker 385 erreicht dies durch Aufrechterhalten eines konstanten Verhältnisses zwischen den Basis-Emitter-Spannungen (UBE) der Transistoren 310, 320, deren Verlustleistung durch Beeinflussung des Stromes IQ gesteuert wird. Zwischen IQ und der Aufnahmeleistung der Transistoren 310, 320 besteht eine im Wesentlichen quadratische Beziehung.

Da beide Transistoren 310, 320 denselben Strom l_{Q} führen, wird ihre relative Energieabgabe nur über ihre Kollektor-Emitter-Spannung (UCE) bestimmt. Hierbei ist die Schaltung 300 derart ausgelegt, dass im Betrieb die Kollektor-Emitter-Spannung des Transistors 310 (UCE1) größer ist als die Kollektor-Emitter-Spannung des Transistors 320 (UCE2). Daher nimmt der Transistor 310 unabhängig von der Größe des Stromes IQ jeweils mehr Energie auf und wird daher wärmer als der als Diode geschaltete Transistor 320. Wird nun der Luft-Volumenstrom des Lüfters 120 erhöht, verringert sich der thermische Widerstand der Transistoren 310, 320 und der Operationsverstärker 385 hält die vorgegebene Temperaturdifferenz konstant, indem er den Strom I_{Q} erhöht. Dieser wird vom Widerstand 394 erfasst und vom Operationsverstärker 395 verstärkt, an dessen Ausgang der Messwert Vmess erzeugt wird.

Der Operationsverstärker 395 begrenzt im Zusammenspiel mit dem Transistor 330 die Spannung am Widerstand 394 auf maximal 2 V. Somit wird eine Sperrung verhindert, die auftreten würde, wenn der Ausgang des Operationsverstärkers 385 auf etwa 5 V ansteigt. In diesem Fall würde sich UCE1 dem Wert UCE2 nähern und es würde unmöglich sein, die vorgegebene Temperaturdifferenz zu erreichen. Ähnlich verhindern die Widerstände 344, 374 eine Sperrung beim Einschalten des Lüfters 120. Das zwischen IQ und der Aufnahmeleistung der Transistoren 310, 320 bestehende quadratische Verhältnis leistet einen guten Beitrag zur Linearisierung.

**Fig. 4** zeigt ein Blockdiagramm einer anderen bevorzugten Ausführungsform des Lüfters 120 von Fig. 1, welcher in Fig. 4 analog zu Fig. 2 ebenfalls als Rohrlüfter mit dem schematisch angedeuteten Rohr 260 dargestellt ist. Gleiche und gleich wirkende Komponenten wie in den Fig. 1 und 2 werden deshalb in Fig. 4 entweder weggelassen, wie z.B. der µC 130 von Fig. 1 oder der Temperatursensor 248 von Fig. 2, oder mit denselben Bezugszeichen gekennzeichnet und nicht nochmals im Detail beschrieben.

Fig. 4 illustriert eine Realisierung der Erfassungsvorrichtung 140 von Fig. 1 unter Verwendung eines Klappen-Anemometers 410 und eines diesem zugeordneten Hall-Sensors 430. Das Klappen-Anemometer 410 hat eine Stauklappe 420, welche mit einer Torsionsfeder 422 verbunden ist und an einem Ende einen Permanentmagneten 424 trägt, welcher am Hall-Sensor 430 ein Magnetfeld erzeugt.

Im Betrieb des Lüfters 120 wird die Stauklappe 420 durch den Luft-Volumenstrom 125 ausgelenkt. Die Auslenkung hängt vom Luft-Volumenstrom 125 ab, d.h. je stärker der Volumenstrom 125 ist, umso größer ist die Auslenkung der Klappe 420. Die Torsionsfeder 422 wirkt der Auslenkung der Klappe 420 entgegen, um diese in ihre Ruhestellung zu bewegen.

Die Auslenkung der Klappe 420 wird mit dem Hall-Sensor 430 erfasst. Da sich der Magnet 424 bei einer Auslenkung der Klappe 420, wie aus Fig. 4 ersichtlich, von dem Hall-Sensor 430 entfernt, ist die am Sensor 430 auftretende Feldstärke des Magneten 424 ein direktes Maß für die Auslenkung der Klappe 420. Zur Erfassung dieser Feldstärke wird beispielsweise ein analoges Hall-lC zur Realisierung des Sensors 430 verwendet, bei dem die Ausgangs- bzw. Hallspannung direkt proportional zur Feldstärke ist. Aus dieser Hallspannung wird der Wert Vmess abgeleitet.

Durch eine Lagerung der Stauklappe 420 in ihrem Schwerpunkt kann der Lüfter 120 lageunabhängig, d.h. unabhängig von einer jeweils erforderlichen Ausrichtung, montiert werden. In einer besonders vorteilhaften Ausführung wird der Magnet 424 hierbei als Gegengewicht zum Gewicht des auslenkbaren Flügels der Klappe 420 ausgebildet.

**Fig. 5** zeigt ein Messdiagramm 500, das eine beispielhafte, mit dem Klappen-Anemometer 410 von Fig. 4 gemessene Hallspannung 530 in Abhängigkeit von unterschiedlichen Auslenkungswinkeln der Stauklappe 420 zeigt. Hierbei sind entsprechende Auslenkungswinkel in Gradangaben auf der horizontalen Achse 510 abgebildet. Auf der vertikalen Achse 520 sind bei den entsprechenden Auslenkungen gemessene Hallspannungen abgebildet.

Wie Fig. 5 zeigt, ist die Hallspannung 530 maximal, wenn die Klappe 420 sich in ihrer Ruhestellung befindet und nimmt mit steigender Auslenkung ab.

**Fig. 6** zeigt eine Routine "Init V_{offset}" S600, welche bei der Inbetriebnahme bzw. Initialisierung des Lüfters 120 von Fig. 1, 2 oder 4, d.h. bei Stillstand des Lüfterrads 122, von der Temperatur- und Offset-Kompensationsanordnung 150 der Fig. 1 ausgeführt wird. Die Routine S600 dient zur Bestimmung eines Korrekturwerts zum Nullpunktabgleich bzw. zur Kalibrierung des Lüfters 120.

Da der Lüfter 120 bei Ausführung der Routine S600 nicht im Betrieb ist, müsste sein Lüfterrad 122 stillstehen und der Volumenstrom-Messwert Vmess folglich gleich Null sein. In der Regel kann jedoch trotzdem ein Messwert Vmess, der ungleich Null ist, aufgrund von Bauteiltoleranzen auftreten. Deshalb wird der Lüfter 120 durch den von der Routine S600 bewirkten Nullpunktabgleich kalibriert.

Bei S602 wird die Umgebungstemperatur vom Temperatursensor 248 gemessen und als aktuelle Temperatur Tu gesetzt.

Bei S604 wird aus einer in der Speichereinheit 152 der Anordnung 150 gespeicherten Tabelle ein der aktuellen Temperatur Tu zugeordneter Korrekturwert Vtemp zum Nullpunktabgleich des Messwerts Vmess bestimmt. Beispielhafte Korrekturwerte in Abhängigkeit entsprechender aktueller Temperaturen Tu sind in Fig. 8 dargestellt.

Bei S606 wird der Volumenstrom-Messwert Vmess erfasst.

Bei S608 wird ein entsprechender Korrekturwert V_{offset} mit V_{offset} := Vₘₑₛₛ - Vₜₑₘₚ zum Nullpunktabgleich ermittelt. Die Routine S600 endet dann bei S609.

**Fig. 7** zeigt eine Routine "Calc Vᵢₛₜ" S700, welche im Betrieb des Lüfters 120 von Fig. 1, 2 oder 4 von der Temperatur- und Offset-Kompensationsanordnung 150 von Fig. 1 ausgeführt wird. Die Routine S700 dient zur Temperatur- und Offset-Kompensation des Volumenstrom-Messwerts Vmess, welcher einen von der aktuellen Temperatur Tu abhängigen Fehler aufweist, der in der Regel bei wachsender Temperatur Tu ansteigt.

Analog zu S602 und S604 von Fig. 6 werden bei S702 und S704 eine jeweils aktuelle Temperatur Tu und ein dieser zugeordneter Korrekturwert Vtemp bestimmt.

Bei S706 wird analog zu S606 der durch den Lüfter 120 erzeugte Volumenstrom-Messwert Vmess erfasst, welcher jedoch temperatur- und offsetbedingt fehlerbehaftet ist. Deshalb erfolgt bei S708 eine Temperatur- und Offset-Kompensation.

Wie Fig. 7 zeigt, wird bei S708 der Messwert Vmess mit dem bei S704 bestimmten Korrekturwert Vtemp und dem bei S608 (Fig. 6) bestimmten Korrekturwert Voffset beaufschlagt, hier beispielhaft durch einen Subtraktionsvorgang. Hierbei erhält man den Temperatur- und offsetkompensierten Wert Vist mit Vist := Vmess - Voffset - Vtemp. Die Routine S700 endet bei S709.

Es wird darauf hingewiesen, dass die Routinen S600 von Fig. 6 und S700 von Fig. 7 auch getrennt voneinander verwendet werden können. Z.B. könnte die Kalibrierung des Lüfters 120 bereits werksseitig bei der Fertigung erfolgen. Hierbei kann eine Ausführung der Routine S600 bei der Inbetriebnahme des Lüfters 120 entfallen, so dass lediglich die Routine S700 in dessen Betrieb auszuführen ist.

**Fig. 8** zeigt ein Diagramm 800, welches eine beispielhafte Kennlinie 830 des Temperaturgangs der Luft-Volumenstrommessung gemäß Ausführungsformen der Erfindung illustriert. Die Kennlinie 830 definiert die temperaturabhängigen Korrekturwerte Vtemp, welche bei den Routinen S600 von Fig. 6 und S700 von Fig. 7 verwendet werden.

Wie aus Fig. 8 ersichtlich, sind entsprechende Temperaturen in ° C, welche die Temperaturen Tu darstellen, auf der horizontalen Achse 810 abgebildet. Auf der vertikalen Achse 820 sind die diesen zugeordneten Korrekturwerte Vtemp abgebildet. Diese nehmen bei der Kennlinie 830 mit steigender Temperatur Tu zu.

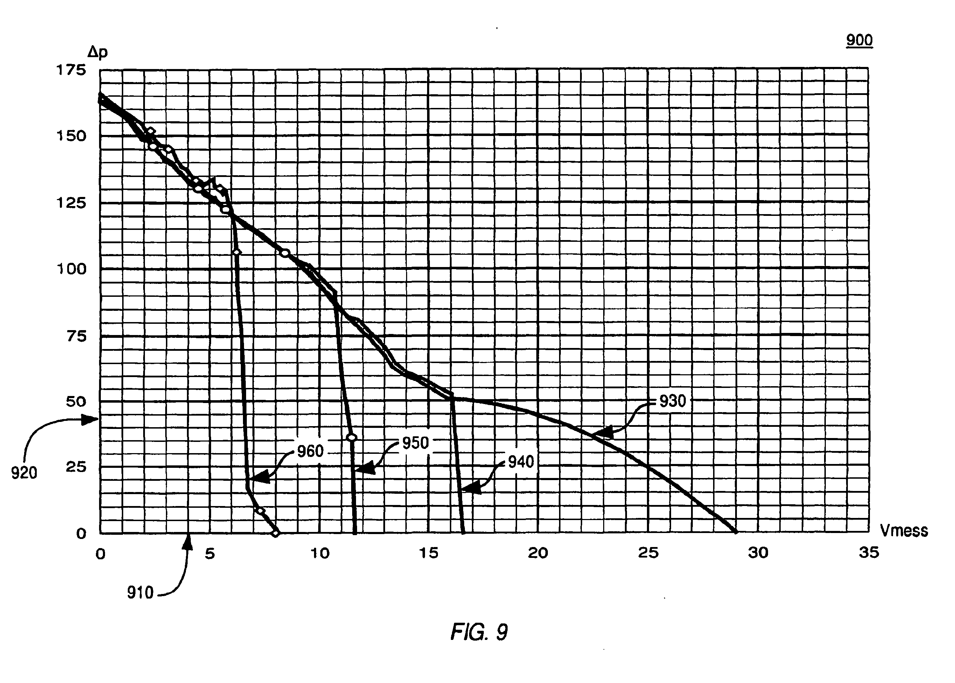

**Fig. 9** zeigt ein beispielhaftes Messprotokoll 900 des vom Lüfter 120 (Fig. 1) erzeugten Luft-Volumenstroms mit vier verschiedenen Messkurven 930, 940, 950, 960. Hierbei ist der erzeugte Volumenstrom-Messwert Vmess auf der horizontalen Achse 910 abgebildet und auf der vertikalen Achse 920 sind Gegendruck-Messwerte △p dargestellt.

Die Kurve 930 wurde bei Betrieb des Lüfters mit maximaler Lüfterdrehzahl ohne die erfindungsgemäße Luft-Volumenstromregelung bestimmt. Diese Kurve illustriert den bei einem bestimmten Gegendruck △p maximal von dem Lüfter 120 erzeugbaren Luft-Volumenstrom, welcher lüfterspezifisch ist. Wie die Kurve 930 verdeutlicht, ist der von dem Lüfter 120 erzeugte Luft-Volumenstrom hierbei nicht konstant, sondern verläuft umgekehrt proportional zum Gegendruck, d.h. je größer der Gegendruck, umso kleiner ist der erzeugte Luft-Volumenstrom.

Die Kurven 940, 950, 960 illustrieren Messungen bei Verwendung der erfindungsgemäßen Luft-Volumenstromregelung gemäß den Fig. 2 bis 4, wobei jeder dieser Kurven ein unterschiedlicher Volumenstrom-Sollwert V_s zugrunde liegt. Wie aus den Kurven 940, 950, 960 ersichtlich, ist der von dem Lüfter 120 erzeugte Luft-Volumenstrom hierbei jeweils bis zu einem bestimmten Gegendruck etwa konstant.

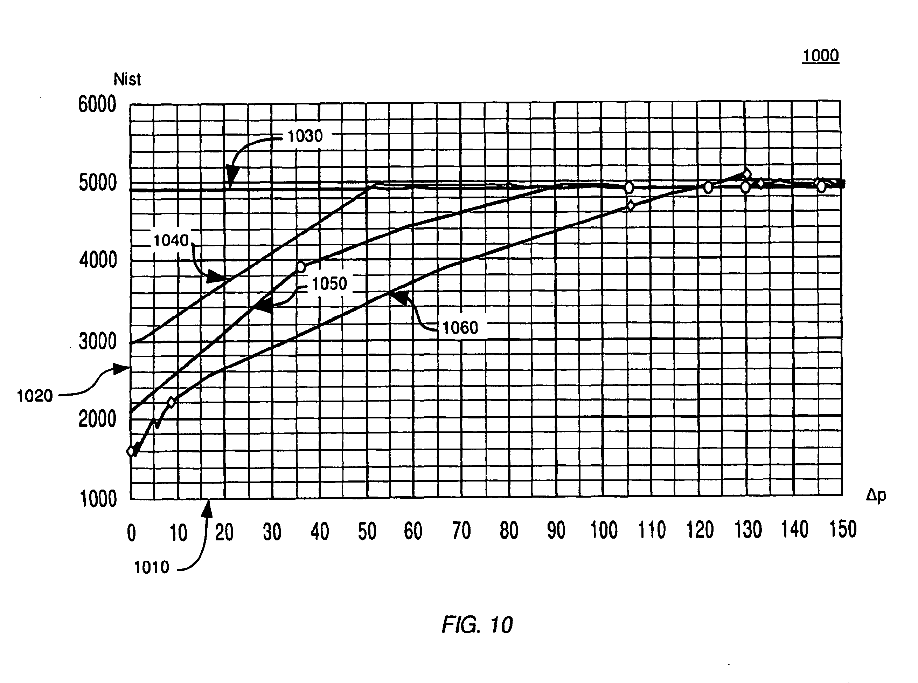

**Fig. 10** zeigt ein beispielhaftes Messprotokoll 1000 mit vier verschiedenen Messkurven 1030, 1040, 1050, 1060, welche die Abhängigkeit des auf der vertikalen Achse 1010 abgebildeten Drehzahl-Istwerts Nᵢₛₜ des Lüfters 120 von dem auf der horizontalen Achse 1020 abgebildeten Gegendruck Δp illustrieren. Diese wurden jeweils bei der Bestimmung der Messkurven 930 - 960 von Fig. 9 ermittelt. Dementsprechend wurde die Kurve 1030 bei Betrieb des Lüfters mit maximaler Lüfterdrehzahl ohne die erfindungsgemäße Luft-Volumenstromregelung als Vergleichsgrundlage bestimmt.

Die Kurven 1040, 1050, 1060 zeigen Messungen bei Verwendung der erfindungsgemäßen Luft-Volumenstromregelung gemäß den Fig. 2 bis 4. Jeder dieser Kurven liegt ein unterschiedlicher Volumenstrom-Sollwert V_s zugrunde. Wie aus den Kurven 1040, 1050, 1060 ersichtlich, wird der Lüfter 120 bei wachsendem Gegendruck Δp mit steigender Drehzahl betrieben, um den von diesem erzeugten Luft-Volumenstrom im Wesentlichen konstant zu halten.

Naturgemäß sind im Rahmen der vorliegenden Erfindung vielfache Abwandlungen und Modifikationen möglich.

## Patentansprüche

1. Anordnung, geeignet für einen Lüfter und einen zu dessen Antrieb dienenden, elektronisch kommutierten Elektromotor (10), **gekennzeichnet durch**:
Eine Erfassungsvorrichtung (140) zur Erfassung eines vom Lüfter (120) erzeugten Luft-Volumenstroms (125) und zur Erzeugung eines Volumenstrom-Messwerts (Vmess);
eine Volumenstrom-Regelanordnung (160) zur Regelung des im Betrieb vom Lüfter (120) erzeugten Luft-Volumenstroms (125) auf einen vorgegebenen Volumenstrom-Sollwert (V_s), welche Volumenstrom-Regelanordnung (160) dazu ausgebildet ist, einen Drehzahl-Sollwert (N_s) für den Elektromotor (110) zu erzeugen;
einen Drehzahlregler (170) zur Regelung der Drehzahl des Elektromotors (110) auf den von der Volumenstrom-Regelanordnung (160) erzeugten Drehzahl-Sollwert (N_s);
und eine Korrekturanordnung (150), welche dazu ausgebildet ist, den Volumenstrom-Messwert (Vmess) in Abhängigkeit von der aktuellen Temperatur (Tu) zu korrigieren.

2. Anordnung nach Anspruch 1, bei welcher ein Temperatursensor (246) zur Erfassung der aktuellen Temperatur vorgesehen ist, und eine Speichereinheit (152), in welcher von der aktuellen Temperatur (Tu) abhängige Korrekturwerte zur Korrektur des Volumenstrom-Messwerts (Vmess) gespeichert sind.

3. Anordnung nach Anspruch 1 oder 2, bei welcher die Korrekturanordnung (150) dazu ausgebildet ist, bei der Inbetriebnahme des Lüfters (120) einen Korrekturwert zur Korrektur des Volumenstrom-Messwerts (Vmess) zu erzeugen.

4. Anordnung nach einem der vorhergehenden Ansprüche, bei welcher eine Anordnung (150) zur Offset-Kompensation vorgesehen ist, welche dazu ausgebildet ist, im Betrieb des Lüfters (120) bei einer vorgegebenen Lüfterdrehzahl einen Offset der Erfassungsvorrichtung (140) zu bestimmen.

5. Anordnung nach Anspruch 4, bei welcher die Anordnung (150) zur Offset-Kompensation dazu ausgebildet ist, den Offset abhängig von der aktuellen Temperatur (Tu) zu korrigieren und als temperaturkompensierten Offset abzuspeichern.

6. Anordnung nach Anspruch 4 oder 5, bei welcher der temperaturkompensierte Offset zur Korrektur des Volumenstrom-Messwerts (Vmess) dient.

7. Anordnung nach Anspruch 6, bei welcher die Anordnung (150) zur Offset-Kompensation dazu ausgebildet ist, den Volumenstrom-Messwert (Vmess) durch einen Additions- oder Subtraktionsvorgang mit dem temperaturkompensierten Offset zu beaufschlagen.

8. Anordnung nach einem der vorhergehenden Ansprüche, bei welcher die Erfassungsvorrichtung (140) ein thermisches Anemometer (300) zur Messung des vom Lüfter (120) erzeugten Luft-Volumenstroms (125) aufweist.

9. Anordnung nach Anspruch 8, bei welcher im thermischen Anemometer (300) mindestens ein Halbleitersensor (242, 244, 310, 320) vorgesehen ist, dessen Betriebstemperatur eine Funktion der Größe des vom Lüfter (120) erzeugten Luft-Volumenstroms (125) ist.

10. Anordnung nach Anspruch 9, bei welcher der mindestens eine Halbleitersensor (242, 244, 310, 320) in einer Luftleitröhre (248) angeordnet ist, welche dazu ausgebildet ist, eine gleichgerichtete Luftströmung auf den mindestens einen Halbleitersensor (242, 244) zu bewirken.

11. Anordnung nach Anspruch 9 oder 10, bei welcher das thermische Anemometer (300) dazu ausgebildet ist, einen durch den mindestens einen Halbleitersensor (242, 244, 310, 320) fließenden Strom in Abhängigkeit vom Volumenstrom-Messwert (Vmess) zu beeinflussen.

12. Anordnung nach Anspruch 11, bei welcher die Volumenstrom-Regelanordnung (160) dazu ausgebildet ist, den Drehzahl-Sollwert (N-s) für den Elektromotor (110) in Abhängigkeit von dem durch den mindestens einen Halbleitersensor (242, 244, 310, 320) fließenden Strom (IQ) zu beeinflussen.

13. Anordnung nach einem der Ansprüche 8 bis 12, bei welcher das thermische Anemometer (300) zwei Halbleitersensoren (242, 244, 310, 320) aufweist, und dazu ausgebildet ist, im Betrieb des Lüfters (120) die Temperaturdifferenz zwischen diesen Halbleitersensoren (242, 244, 310, 320) im Wesentlichen konstant zu halten.

14. Anordnung nach Anspruch 13, bei welcher die zwei Halbleitersensoren (242, 244, 310, 320) thermisch entkoppelt sind.

15. Anordnung nach einem der vorhergehenden Ansprüche, bei welcher die Erfassungsvorrichtung (140) ein Klappen-Anemometer (410) zur Messung des vom Lüfter (120) erzeugten Luft-Volumenstroms (125) aufweist.

16. Anordnung nach Anspruch 15, bei welcher das Klappen-Anemometer (410) eine Stauklappe (420) aufweist, welche durch den vom Lüfter (120) erzeugten Luft-Volumenstrom (125) auslenkbar ist.

17. Anordnung nach Anspruch 16, bei welcher der Stauklappe (420) eine Feder (422) zugeordnet ist, die dazu dient, die Stauklappe (420) gegen den vom Lüfter (120) erzeugten Luft-Volumenstrom (125) in eine Ruhestellung zu bewegen.

18. Anordnung nach Anspruch 16 oder 17, bei welcher der Stauklappe (420) ein Magnet (424) zugeordnet ist, welcher im Betrieb an einem der Stauklappe (420) zugeordneten Sensor (430) ein Signal erzeugt, welches von der Feldstärke des Magneten (424) abhängig ist.

19. Anordnung nach Anspruch 18, bei welcher das Klappen-Anemometer (410) dazu ausgebildet ist, abhängig von dem am Sensor (430) erzeugten Signal die Auslenkung der Stauklappe (420) zu bestimmen.

20. Anordnung nach einem der Ansprüche 16 bis 19, bei welcher die Volumenstrom-Regelanordnung (160) dazu ausgebildet ist, den Drehzahl-Sollwert (N_s) für den Elektromotor (110) in Abhängigkeit von der Auslenkung der Stauklappe (420) zu beeinflussen.

21. Anordnung nach einem der vorhergehenden Ansprüche, bei welcher die Volumenstrom-Regelanordnung (160) als digitaler Regler in einer dem Elektromotor (110) zugeordneten Steuereinheit (130) implementiert ist.

22. Anordnung nach einem der vorhergehenden Ansprüche, bei welcher die Vorrichtung (140) zur Erfassung des vom Lüfter (120) erzeugten Luft-Volumenstroms (125) ein thermisches Anemometer (300) zur Erfassung des vom Lüfter (120) erzeugten Luft-Volumenstroms (125) aufweist.

## Claims

1. Arrangement, suitable for a fan and an electronically commutated electric motor (10) which is used to drive it, **characterized by**:
a capture device (140), to capture an air volume flow (125) which the fan (120) generates, and to generate a volume flow measured value (Vmess);
a volume flow regulating arrangement (160), to regulate the air volume flow (125) which is generated in operation of the fan (120) to a preset volume flow setpoint value (V_s), said volume flow regulating arrangement (160) being designed to generate a rotational speed setpoint value (N_s) for the electric motor (110);
a rotational speed regulator (170), to regulate the rotational speed of the electric motor (110) to the rotational speed setpoint value (N_s) which the volume flow regulating arrangement (160) generates;
and a correction arrangement (150), which is designed to correct the volume flow measured value (Vmess) depending on the prevailing temperature (Tu).

2. Arrangement according to Claim 1, wherein a temperature sensor (246) is provided to capture the prevailing temperature, and a memory unit (152), in which correction values depending on the prevailing temperature (Tu) are stored for correcting the volume flow measured value (Vmess).

3. Arrangement according to Claim 1 or 2, wherein the correction arrangement (150) is designed to generate a correction value for correcting the volume flow measured value (Vmess) when the fan (120) is put into operation.

4. Arrangement according to any one of the preceding claims, wherein an arrangement (150) for offset compensation is provided, and is designed to specify an offset to the capture device (140) at a preset fan rotational speed when the fan (120) is in operation.

5. Arrangement according to Claim 4, wherein the arrangement (150) for offset compensation is designed to correct the offset depending on the prevailing temperature (Tu), and to store it as the temperature-compensated offset.

6. Arrangement according to Claim 4 or 5, wherein the temperature-compensated offset is used to correct the volume flow measured value (Vmess).

7. Arrangement according to Claim 6, wherein the arrangement (150) for offset compensation is designed to apply the temperature-compensated offset to the volume flow measured value (Vmess) by an addition or subtraction process.

8. Arrangement according to any one of the preceding claims, wherein the capture device (140) has a thermal anemometer (300) for measuring the air volume flow (125) which the fan (120) generates.

9. Arrangement according to Claim 8, wherein in the thermal anemometer (300), at least one semiconductor sensor (242, 244, 310, 320), the operating temperature of which is a function of the magnitude of the air volume flow (125) which the fan (120) generates, is provided.

10. Arrangement according to Claim 9, wherein the at least one semiconductor sensor (242, 244, 310, 320) is arranged in an air pipe (248), which is designed to cause a rectified air flow onto the at least one semiconductor sensor (242, 244).

11. Arrangement according to Claim 9 or 10, wherein the thermal anemometer (300) is designed to influence a current flowing through the at least one semiconductor sensor (242, 244, 310, 320) depending on the volume flow measured value (Vmess).

12. Arrangement according to Claim 11, wherein the volume flow regulating arrangement (160) is designed to influence the rotational speed setpoint value (N_s) for the electric motor (110) depending on the current (IQ) flowing through the at least one semiconductor sensor (242, 244, 310, 320).

13. Arrangement according to any one of Claims 8 to 12,
wherein the thermal anemometer (300) has two semiconductor sensors (242, 244, 310, 320), and is designed to keep the temperature difference between these semiconductor sensors (242, 244, 310, 320) essentially constant when the fan (120) is in operation.

14. Arrangement according to Claim 13, wherein the two semiconductor sensors (242, 244, 310, 320) are thermally decoupled.

15. Arrangement according to any one of the preceding claims, wherein the capture device (140) has a vane anemometer (410) for measuring the air volume flow (125) which the fan (120) generates.

16. Arrangement according to Claim 15, wherein the vane anemometer (410) has an air vane (420), which can be deflected by the air volume flow (125) which the fan (120) generates.

17. Arrangement according to Claim 16, wherein with the air vane (420), a spring (422), which is used to move the air vane (420) into an idle position against the air volume flow (125) which the fan (120) generates, is associated.

18. Arrangement according to Claim 16 or 17, wherein with the air vane (420), a magnet (424), which in operation generates a signal depending on the field strength of the magnet (424) on a sensor (430) which is assigned to the air vane (420), is associated.

19. Arrangement according to Claim 18, wherein the vane anemometer (410) is designed to determine the deflection of the air vane (420) depending on the signal generated at the sensor (430).

20. Arrangement according to any one of Claims 16 to 19, wherein the volume flow regulating arrangement (160) is designed to influence the rotational speed setpoint value (N_s) for the electric motor (110) depending on the deflection of the air vane (420).

21. Arrangement according to any one of the preceding claims, wherein the volume flow regulating arrangement (160) is implemented as a digital regulator in a control unit (130) associated with the electric motor (110).

22. Arrangement according to any one of the preceding claims, wherein the device to capture the air volume flow (125) which the fan (120) generates has a thermal anemometer (300) to capture the air volume flow (125) which the fan (120) generates.

## Revendications

1. Dispositif convenant pour un ventilateur et un moteur électrique à commutation électronique (10) servant à son entraînement, **caractérisé par** :
un dispositif de détection (140) permettant de détecter un débit volumique d'air (125) généré par le ventilateur (120) et de générer une valeur de mesure de débit volumique (Vmess) ;
un dispositif de régulation du débit volumique (160) permettant de réguler le débit volumique d'air (125) généré en fonctionnement par le ventilateur (120) sur une valeur de consigne de débit volumique prédéfinie (V_s), lequel dispositif de régulation du débit volumique (160) est conçu pour générer une valeur de consigne de vitesse de rotation (N_s) pour le moteur électrique (110) ;
un régulateur de vitesse de rotation (170) permettant de réguler la vitesse de rotation du moteur électrique (110) sur la valeur de consigne de vitesse de rotation (N_s) générée par le dispositif de régulation du débit volumique (160) ;
et un dispositif de correction (150) qui est conçu pour corriger la valeur de mesure de débit volumique (Vmess) en fonction de la température actuelle (Tu).

2. Dispositif selon la revendication 1, dans lequel il est prévu un capteur de température (246) pour détecter la température actuelle et une unité de mémoire (152) dans laquelle sont stockées des valeurs de correction en fonction de la température actuelle (Tu) pour corriger la valeur de mesure de débit volumique (Vmess).

3. Dispositif selon la revendication 1 ou 2, dans lequel le dispositif de correction (150) est conçu pour générer une valeur de correction pour corriger la valeur de mesure de débit volumique (Vmess) à la mise en service du ventilateur (120).

4. Dispositif selon une des revendications précédentes, dans lequel est prévu un dispositif (150) de compensation de décalage, lequel est conçu pour déterminer, pendant le fonctionnement du ventilateur (120), un décalage du dispositif de détection (140) à une vitesse de rotation prédéfinie du ventilateur.

5. Dispositif selon la revendication 4, dans lequel le dispositif (150) de compensation de décalage est conçu pour corriger le décalage en fonction de la température actuelle (Tu) et le mémoriser en tant que décalage compensé en température.

6. Dispositif selon la revendication 4 ou 5, dans lequel le décalage compensé en température sert à corriger la valeur de mesure de débit volumique (Vmess).

7. Dispositif selon la revendication 6, dans lequel le dispositif (150) de compensation de décalage est conçu pour appliquer le décalage compensé en température à la valeur de mesure de débit volumique (Vmess) par une opération d'addition ou de soustraction.

8. Dispositif selon une des revendications précédentes, dans lequel le dispositif de détection (140) présente un anémomètre thermique (300) pour mesurer le débit volumique d'air (125) généré par le ventilateur (120).

9. Dispositif selon la revendication 8, dans lequel il est prévu dans l'anémomètre thermique (300) au moins un capteur à semi-conducteur (242, 244, 310, 320) dont la température de fonctionnement est une fonction de la valeur du débit volumique d'air (125) généré par le ventilateur (120).

10. Dispositif selon la revendication 9, dans lequel ledit au moins un capteur à semi-conducteur (242, 244, 310, 320) est disposé dans un tube de guidage d'air (248) qui est conçu pour produire un écoulement d'air dans la même direction sur ledit au moins un capteur à semi-conducteur (242, 244).

11. Dispositif selon la revendication 9 ou 10, dans lequel l'anémomètre thermique (300) est conçu pour influencer un courant qui circule à travers ledit au moins un capteur à semi-conducteur (242, 244, 310, 320) en fonction de la valeur de mesure de débit volumique (Vmess).

12. Dispositif selon la revendication 11, dans lequel le dispositif de régulation du débit volumique (160) est conçu pour influencer la valeur de consigne de vitesse de rotation (N_s) pour le moteur électrique (110) en fonction du courant (IQ) qui circule à travers ledit au moins un capteur à semi-conducteur (242, 244, 310, 320).

13. Dispositif selon une des revendications 8 à 12, dans lequel l'anémomètre thermique (300) présente deux capteurs à semi-conducteur (242, 244, 310, 320) et est conçu pour maintenir la différence de température entre ces capteurs à semi-conducteur (242, 244, 310, 320) essentiellement constante pendant le fonctionnement du ventilateur (120).

14. Dispositif selon la revendication 13, dans lequel les deux capteurs à semi-conducteur (242, 244, 310, 320) sont découplés thermiquement.

15. Dispositif selon une des revendications précédentes, dans lequel le dispositif de détection (140) présente un anémomètre à volet (410) pour mesurer le débit volumique d'air (125) généré par le ventilateur (120).

16. Dispositif selon la revendication 15 dans lequel l'anémomètre à volet (410) présente un volet de retenue (420) qui peut être dévié par le débit volumique d'air (125) généré par le ventilateur (120).

17. Dispositif selon la revendication 16, dans lequel un ressort (422) est associé au volet de retenue (420), lequel sert à déplacer le volet de retenue (420) dans une position de repos à l'encontre du débit volumique d'air (125) généré par le ventilateur (120).

18. Dispositif selon la revendication 16 ou 17, dans lequel un aimant (424) est associé au volet de retenue (420), lequel génère en fonctionnement, à un capteur (430) associé au volet de retenue (420), un signal qui dépend de l'intensité de champ de l'aimant (424).

19. Dispositif selon la revendication 18, dans lequel l'anémomètre à volet (410) est conçu pour déterminer la déviation du volet de retenue (420) en fonction du signal généré au capteur (430).

20. Dispositif selon une des revendications 16 à 19, dans lequel le dispositif de régulation du débit volumique (160) est conçu pour influencer la valeur de consigne de vitesse de rotation (N_s) pour le moteur électrique (110) en fonction de la déviation du volet de retenue (420).

21. Dispositif selon une des revendications précédentes, dans lequel le dispositif de régulation du débit volumique (160) est implémenté sous la forme d'un régulateur numérique dans une unité de commande (130) associée au moteur électrique (110).

22. Dispositif selon une des revendications précédentes, dans lequel le dispositif (140) de détection du débit volumique d'air (125) généré par le ventilateur (120) présente un anémomètre thermique (300) pour détecter le débit volumique d'air (125) généré par le ventilateur (120).
